# EUROPÄISCHE PATENTANMELDUNG

(11) **EP 1 065 330 A1**
(43) Veröffentlichungstag der Anmeldung: **03.01.2001**
(21) Anmeldenummer: 99810581.1
(22) Anmeldetag: 02.07.1999
(51) Int. Cl.: E04B 9/32, E04C 2/54, E04C 2/40, B32B 17/10, C03C 27/12

(54) **Abdeckelement zum Abdecken eines Gebäudeteils**

(71) Anmelder: Glas Trösch Holding AG, 3011 Bern (CH)
(72) Erfinder: Gilgen, René, 3176 Neuenegg (CH)
(74) Vertreter: Roshardt, Werner Alfred, Dipl.-Phys.

(57) **Zusammenfassung**

Ein Abdeckelement (10) zum Abdecken eines Gebäudeteils weist eine Abdeckplatte (20) auf, die zwei durch eine Verbundglasfolie (12, 14, 16) zu einem Verbundglas verbundene Glasscheiben (22, 24) umfasst. Die Verbundglasfolie (12, 14, 16) weist eine über einen Rand einer der Glasscheiben (22, 24) vorstehende Partie (14) zum Verbinden der Abdeckplatte (20) mit einer Haltevorrichtung (52) auf, so dass auf weitere Beschläge zum Halten der Abdeckplatte (20) an der Haltevorrichtung (52) verzichtet werden kann. Das erfindungsgemässe Abdeckelement (10) ermöglicht die Herstellung einer untergehängten Lichtdecke mit bloss geringfügigen Helligkeitsunterschieden an der Unterseite der Lichtdecke.

## Beschreibung

### Technisches Gebiet

Die vorliegende Erfindung betrifft ein Abdeckelement zum Abdecken eines Gebäudeteils nach dem Oberbegriff des Anspruchs 1, wobei das Abdeckelement insbesondere auch für eine untergehängte Decke verwendbar ist.

### Stand der Technik

Zum Abdecken oder Verkleiden von Gebäudeteilen wie Decken, Aussen- oder Innenwänden usw. ist eine Vielzahl von verschiedenen Abdeckelementen bekannt, welche häufig eine Abdeck- bzw. Verkleidungsplatte aus Glas als eigentliches Verkleidungs- oder Abdeckteil umfassen. So ist es z.B. zum Abdecken der Unterseite einer tragenden Decken- oder Dachkonstruktion bekannt, Abdeckplatten an der Decken- oder Dachkonstruktion aufzuhängen und so eine untergehängte Decke zu schaffen. Untergehängte Decken mit Abdeckplatten (im Falle von untergehängten Decken auch Deckenplatten genannt) aus einem durchscheinenden Material werden auch als untergehängte Lichtdecken bezeichnet. Üblicherweise sind Leuchten zwischen einer die untergehängte Lichtdecke tragenden Halte- oder Tragkonstruktion (z.B. der tragenden Decken- oder Dachkonstruktion) und der Lichtdecke angeordnet, um den durch die Lichtdecke nach oben abgeschlossenen Raum zu beleuchten. Die Deckenplatten von untergehängten Lichtdecken sind meistens aus Glas gefertigt, wobei aus Sicherheits- und Festigkeitsgründen Verbundsicherheitsglas bevorzugt wird.

Zur Befestigung der Deckenplatten aus Glas an der die Lichtdecke tragenden Halte- oder Tragkonstruktion können die Glaskanten der Deckenplatten mit Metallprofilen eingefasst und mittels der Metallprofile an der Tragkonstruktion befestigt sein. Es ist auch bekannt, Aufhängebeschläge von oben durch die zwischen zwei benachbarten Deckenplatten gebildeten Fugen hindurch zu führen und die Glasunterseite der Deckenplatten auf Auflageflächen aufzulegen, die an den Aufhängebeschlägen angeformt sind. Weiter sind Befestigungssysteme mit Punkthalterungen bekannt, bei denen Aufhängebeschläge durch Bohrungen in den Deckenplatten aus Glas hindurch geführt oder mit in den Glasplatten integrierten Befestigungsbeschlägen verbunden sind.

Sämtliche bisher bekannten Befestigungssysteme zum Aufhängen von untergehängten Lichtdecken an den die Lichtdecken tragenden Halte- oder Tragkonstruktionen weisen den Nachteil auf, dass wenigstens ein Teil der Aufhängebeschläge von der Rauminnenseite des mit der Lichtdecke nach oben abgeschlossenen Raumes her sichtbar sind. Entweder sind diese Aufhängebeschläge direkt sichtbar, wenn sie unterhalb der Glasunterseiten der Deckenplatten angeordnet sind, oder sie sind indirekt als Schatten oder Diskontinuitäten der Helligkeit an den Glasunterseiten der durchscheinenden Deckenplatten erkennbar, wenn sie zwischen den Deckenplatten und den über den Deckenplatten angeordneten Leuchten angeordnet sind.

Die durch die Aufhängebeschläge verursachten Helligkeitsunterschiede an der Unterseite einer untergehängten Lichtdecke können aus rein ästhetischen Gründen unerwünscht sein. Die Helligkeitsunterschiede können jedoch auch zu einer unregelmässigen Beleuchtung von Objekten führen, die in dem mit der Lichtdecke versehenen Raum angeordnet sind, was insbesondere im Falle von Museen oder anderen Ausstellungsräumen als Nachteil empfunden wird.

### Darstellung der Erfindung

Aufgabe der Erfindung ist die Angabe eines u.a. auch für eine untergehängte Decke verwendbaren Abdeckelementes, welches die Schaffung einer untergehängten Lichtdecke mit bloss geringfügigen Helligkeitsunterschieden an der Unterseite der Lichtdecke ermöglicht.

Die Lösung der Aufgabe ist durch die Merkmale des Anspruchs 1 definiert. Gemäss der Erfindung weist ein Abdeckelement zum Abdecken eines Gebäudeteils eine Abdeckplatte auf, die zwei durch eine Verbundglasfolie zu einem Verbundglas verbundene Glasscheiben umfasst. Das erfindungsgemässe Abdeckelement zeichnet sich dadurch aus, dass die Verbundglasfolie eine über einen Rand einer der Glasscheiben vorstehende Partie zum Verbinden der Abdeckplatte mit einer Haltevorrichtung aufweist.

Als Glasscheibe wird im Zuge der vorliegenden Beschreibung und der Ansprüche stets ein Einscheibenglas bezeichnet, das von einem Verbundglas (auch Mehrscheibenglas genannt) zu unterscheiden ist. Unter einer Haltevorrichtung ist irgend eine Vorrichtung zum Halten oder Tragen der Abdeckplatte zu verstehen. Eine Haltevorrichtung kann z.B. eine tragende Decke oder eine Dachkonstruktion sein, an welche die Abdeckplatten aufgehängt werden, um eine untergehängte Decke zu schaffen, eine Gebäudeaussenwand, an welcher Abdeckplatten als Fassadenplatten angebracht werden, eine speziell zum Halten der Abdeckplatten vorgesehene Baukonstruktion o.ä.

Die Verbundglasfolie hat bei einem erfindungsgemässen Abdeckelement zwei Funktionen: einerseits hält sie (auf für Verbundgläser übliche Art) die mittels der Folie zu einem Verbundglas zusammenlaminierten beiden Glasscheiben der Abdeckplatte zusammen und andrerseits dient eine über einen Rand einer der Glasscheiben vorstehende Partie der Verbundglasfolie zum Verbinden der Abdeckplatte mit einer Haltevorrichtung, um die Abdeckplatte an der Haltevorrichtung zu halten bzw. zu befestigen.

Aufgrund der zusätzlichen Befestigungsfunktion der Verbundglasfolie kann bei einer entsprechenden Bemessung der Verbundglasfolie auf weitere Beschläge zum Halten der Abdeckplatte an der Haltevorrichtung verzichtet werden. So müssen z.B. im Falle einer untergehängten Lichtdecke mit erfindungsgemässen Abdeckelementen die Abdeck- bzw. Deckenplatten weder mit Metallprofilen eingefasst, mit Bohrungen für die Durchführung von Aufhängebeschlägen oder mit in die Deckenplatten integrierten Befestigungsbeschlägen versehen werden. Vom Rauminnem eines mit einer Lichtdecke aus erfindungsgemässen Abdeckelementen ausgerüsteten Raumes aus sind weder Aufhängebeschläge selbst noch deren Schatten erkennbar. Die Glasscheiben an den sichtbaren Unterseiten von benachbarten Deckenplatten können zwischenraumfrei aneinanderstossend angeordnet werden, da keine Zwischenräume für die Durchführung von Aufhängebeschlägen freigelassen werden müssen. Mit den erfindungsgemässen Abdeckelementen kann somit eine im wesentlichen auf der ganzen sichtbaren Fläche gleichmässig leuchtende untergehängte Lichtdecke geschaffen werden.

Die Verbundglasfolie ist jedoch nicht zwingend das einzige Mittel zum Verbinden der Abdeckplatte mit der Haltevorrichtung. So können z.B. erfindungsgemässe Abdeckplatten in Form von vertikal stehenden Fassadenplatten von entsprechenden Plattenträgem getragen werden, während die von den Platten vorstehenden Folienpartien dazu verwendet werden, die Platten in horizontaler Richtung zur Gebäudewand hin an dieser zu halten.

Vorzugsweise ist die Abdeckplatte mittels der vorstehenden Folienpartie mit einem Halteteil verbunden, das zwei weitere Glasscheiben umfasst, welche durch diese Folienpartie zu einem weiteren Verbundglas verbunden sind. Somit umfasst dasAbdeckelement ein erstes Verbundglas in Form derAbdeckplatte und ein zweites Verbundglas in Form des Halteteils, wobei die beiden Verbundgläser mittels einer durchgehenden, zusammenhängenden Verbundglasfolie miteinander verbunden sind. Im Falle eines Abdeckelementes für eine untergehängte Decke dient das erste Verbundglas bzw. die Abdeckplatte als Deckenplatte, während das zweite Verbundglas bzw. das Halteteil als Aufhängeteil zum Aufhängen der Deckenplatte an eine Halte- oder Tragkonstruktion für die untergehängte Decke dient. Aus Sicherheits- und Festigkeitsgründen sind bevorzugterweise sowohl die Glasscheiben der Abdeckplatte als auch die Glasscheiben des Halteteils aus vorgespanntem Einscheibensicherheitsglas gefertigt.

Anstelle von Halteteilen aus Verbundglas sind auch andere Arten von Halteteilen möglich. So kann die Folie selbst an einer Haltevorrichtung wie einer Wand oder Decke, z.B. durch Kleben, befestigt werden. Zur Befestigung an eine Haltevorrichtung kann die Folie auch mit Ösen versehen werden, um ein Aufhängen der Folie an die Haltevorrichtung zu ermöglichen. Als Alternative kann die Folie auch mit einem randseitigen Saum versehen sein, um sie mittels eines Saumrohres mit der Haltevorrichtung zu verbinden.

Bei einer weiteren bevorzugten Ausführungsform eines erfindungsgemässen Abdeckelementes mit einem Halteteil aus Verbundglas steht die vorstehende Partie derVerbundglasfolie entlang eines geradlinigen Randes einer der Glasscheiben der Abdeckplatte vor und bildet entlang dieses Randes ein Schwenkgelenk nach Art eines Scharniers. Dadurch ist das Halteteil um die Scharnierachse schwenkbar mit der Abdeckplatte verbunden. Selbstverständlich ist die Verbundglasfolie flexibel, wie dies bei Folien im allgemeinen der Fall ist. So kann es sich bei derVerbundglasfolie für ein erfindungsgemässes Abdeckelement insbesondere um eine zum Zusammenlaminieren von Verbundgläsern gebräuchliche Folie aus PVB (Polyvinylbutyral) handeln.

Bei einem Abdeckelement mit einem schamiergelenkartig mit der Abdeckplatte verbundenen Halteteil können die an das Scharnier angrenzenden Ränder der auf einer ersten Seite der Verbundglasfolie angeordneten Glasplatten der Abdeckplatte und des Halteteils je mit einer Gehrung (Schrägschnitt) versehen sein, deren Winkel derart bemessen sind, dass die Abdeckplatte und das Halteteil bezüglich einander von einer koplanaren Anordnung aus um mehr als neunzig Grad um die Scharnierachse herum schwenkbar sind. Dadurch können für den Transport derAbdeckelemente die Abdeckplatte und das Halteteil in einer Ebene angeordnet werden, um sie platzsparend wie normale Verbundglasplatten transportieren zu können. Für die Montage können die Halteteile um über 90 Grad geschwenkt werden, um sie z.B. in ein hakenähnliches Element einer Haltevorrichtung einhängen zu können, worauf die Halteteile nach der Montage der Abdeckelemente vorzugsweise rechtwinklig zur Ebene der Abdeckplatte angeordnet sind.

Weiter kann bei einem Abdeckelement mit einem schamiergelenkartig mit der Abdeckplatte verbundenen Halteteil die auf der Sichtseite derAbdeckplatte angeordnete Glasscheibe über das Scharnier hinaus vorstehen, damit bei einer mit einer Vielzahl von Abdeckelementen versehenen Fläche benachbarte Abdeckplatten ohne Zwischenraum aneinanderstossend angeordnet werden können.

Gemäss einer bevorzugten Ausführungsform der Erfindung weist ein Abdeckelement mit einem scharniergelenkartig mit der Abdeckplatte verbundenen Halteteil ein weiteres Halteteil auf, das mittels einer weiteren entlang eines geradlinigen Randes einer Glasplatte der Abdeckplatte vorstehenden Folienpartie mit der Abdeckplatte verbunden ist und zwei weitere Glasscheiben umfasst, welche durch diese weitere Folienpartie zu einem weiteren Verbundglas verbunden sind. Die insgesamt sechs Glasplatten der Abdeckplatte und der beiden Halteteile können durch eine einzige zusammenhängende Verbundglasfolie miteinander verbunden sein. Vorzugsweise sind die beiden Halteteile je um eine Scharnierachse schwenkbar nach Art von Schwenkflügeln an der Abdeckplatte angelenkt, wobei die beiden Schamierachsen zueinander parallel sind.

Gemäss einer weiteren bevorzugten Ausführungsform der Erfindung dient die Abdeckplatte als Deckenplatte für eine untergehängte Decke. Es versteht sich von selbst, dass eine oder mehrere Glasplatten eines erfindungsgemässen Abdeckelementes, insbesondere die an der Sichtseite der Abdeckplatte angeordnete Glasplatte, in für Lichtdecken üblicher Art mit einem Durchsichtsschutz in Form eines Opalüberfangs, eines Siebdruckes und/oder einer Oberflächenätzung versehen sein können.

Zur Herstellung eines erfindungsgemässen Abdeckelementes mit einer Abdeckplatte und einem Halteteil aus Verbundglas werden in einem Autoklav die Glasplatten der Abdeckplatte und die Glasplatten des Halteteils in einem gemeinsamen Laminierprozess zu Verbundgläsern zusammenlaminiert. Vorzugsweise werden nach dem Durchgang des Abdeckelementes durch den Autoklav hindurch und vor dem vollständigen Abkühlen des Abdeckelementes die Abdeckplatte und das Halteteil bezüglich einander verschwenkt, um die Verbundglasfolie teilweise von den zusammenlaminierten Glasplatten zu lösen und dadurch ein schwenkbares Scharniergelenk zwischen der Abdeckplatte und dem Halteteil zu schaffen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein Abdeckelement gemäss einer bevorzugten Ausführungsart der Erfindung in einer vereinfachten geschnittenen Seitenansicht;
- Fig. 2: einen Ausschnitt aus einer untergehängten Lichtdecke mit dem Abdeckelement aus Fig. 1 in einer vereinfachten geschnittenen Seitenansicht.

Grundsätzlich sind in den Figuren gleiche Teile mit gleichen Bezugszeichen versehen.

### Wege zur Ausführung der Erfindung

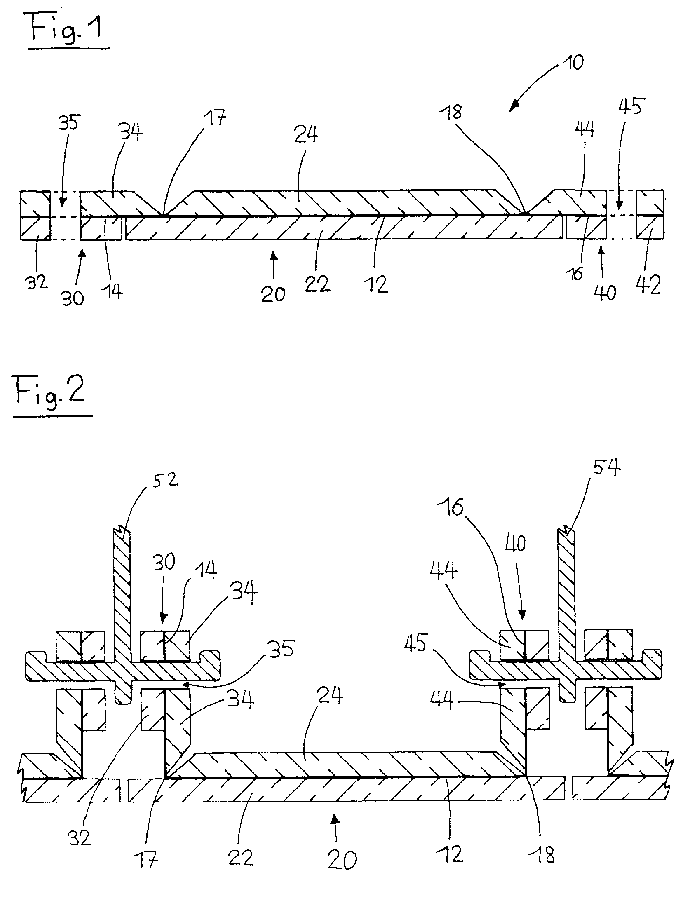

In Fig. 1 ist ein Abdeckelement 10 gemäss einer bevorzugten Ausführungsart der Erfindung in einer vereinfachten geschnittenen Seitenansicht dargestellt. Das Abdeckelement 10 ist zur Verwendung für eine untergehängte Lichtdecke vorgesehen. In Fig. 2 ist dieses Abdeckelement 10 dargestellt, wie es nach der Montage in eineruntergehängten Lichtdecke angeordnet ist.

Das in den Figuren 1 und 2 dargestellte Abdeckelement 10 weist eine ebene Abdeckplatte 20 auf, die als Deckenplatte 20 für die Lichtdecke dient. Die im wesentlichen rechteckige Deckenplatte 20 besteht aus zwei durch eine aus PVB (Polyvinylbutyral) gefertigte Verbundglasfolie 12 zu einem Verbundglas verbundenen Glasscheiben 22, 24, wobei nach der Montage des Abdeckelementes 10 die untere Glasscheibe 22 an der Sichtseite und die obere Glasscheibe 24 an der verdeckten Seite der Lichtdecke angeordnet sind. Die Glasscheiben 22, 24 sind bei dem in den Figuren dargestellten Ausführungsbeispiel der Erfindung aus gleich dicken vorgespannten Einscheibensicherheitsgläsern gefertigt.

Zur Definition der verschiedenen Seiten der im wesentlichen quaderförmigen Glasscheiben werden die durch die Länge und die Breite d aufgespannten Flächen als Hauptseiten, die durch die Länge und die Dicke aufgespannten Flächen als Längsseiten (bzw. als längsseitige Ränder) und die durch die Breite und die Dicke aufgespannten Flächen als Stirnseiten (bzw. als stimseitige Ränder) bezeichnet.

Die untere Glasscheibe 22 der Deckenplatte 20 ist breiter als die obere 24. Die beiden Glasscheiben 22, 24 sind entlang von zwei einander zugewandten Hauptseiten mittels der dazwischliegenden Verbundglasfolie 12 derart zusammenlaminiert, dass die Längsseiten der unteren Glasscheibe 22 auf beiden Seiten um die gleiche Distanz über die Längsseiten der oberen Glasscheibe 24 vorstehen, wobei diese Distanz grösser ist als die Dicke der Glasscheiben 22, 24, 32, 34, 42, 44. DieVerbundglasfolie 12 steht auf beiden Seiten über die längsseitigen Ränder der Deckenplatte 20 hinaus vor (d.h., sie steht beidseitig sowohl über die Längsseiten der oberen Glasscheibe 24 als auch über die Längsseiten der unteren Glasscheibe 22 hinaus vor).

Mittels der über die längsseitigen Ränder der Deckenplatte 20 vorstehenden Folienpartien 14, 16 sind beidseitig je zwei weitere im wesentlichen rechteckige Einscheibensicherheitsgläser 32, 34, 42, 44 zu Verbundgläsern 30, 40 zusammenlaminiert. Die beiden seitlichen Verbundgläser 30, 40 dienen als Halte- bzw. Aufhängeteile 30, 40 zum Aufhängen der Deckenplatte 20 an eine Halte- oder Tragkonstruktion für die Lichtdecke. Sie sind über die durchgehende Verbundglasfolie 12, 14, 16 mit der Deckenplatte 20 verbunden. Das Abdeckelement 10 umfasst somit im wesentlichen sechs Glasscheiben 22, 24, 32, 34, 42, 44 aus vorgespanntem Einscheiben-Sicherheitsglas und eine einzige, die sechs Scheiben miteinander verbindende Verbundglasfolie 12, 14, 16. Sämtliche sechs Glasscheiben 22, 24, 32, 34, 42, 44 sind im wesentlichen rechteckig und gleich dick.

Durch die flexible Verbundglasfolie 12, 14, 16 wird entlang der beiden längsseitigen Ränder der oberen Glasscheibe 24 der Deckenplatte 20 je ein Schwenkgelenk 17, 18 nach Art eines Scharniers zwischen der Deckenplatte 20 und dem jeweiligen Aufhängeteil 30, 40 gebildet. Die Aufhängeteile 30, 40 sind somit um die beiden parallelen Scharnierachsen 17, 18 an den längsseitigen Rändern der oberen Glasscheibe 24 der Deckenplatte 20 herum bezüglich der Deckenplatte 20 schwenkbar. Um eine Verschwenkbarkeit auch dann zu gewährleisten, wenn die durch die Scharniere 17, 18 miteinander verbundenen oberen Glasscheiben 24, 34, 44 der Deckenplatte 20 und der Aufhängeteile 30, 40 entlang der Scharnierachsen 17, 18 nahe beieinander liegen, sind die entlang der Scharniere 17, 18 verlaufenden längsseitigen Ränder der oberen Glasscheibe 24 der Deckenplatte 20 und diejenigen der oberen Glasscheiben 34, 44 der Aufhängeteile 30, 40 je mit einer Gehrung (Schrägschnitt) versehen. Die spitzen Gehrungswinkel betragen bei dem in den Figuren dargestellten Ausführungsbeispiel je ca. 35 Grad. Dadurch können die beiden plattenförmigen Aufhängeteile 30, 40 bezüglich der Deckenplatte 20 von einer koplanaren Anordnung aus je um ca. 110 Grad nach oben und innen geschwenkt werden.

In Fig. 1 ist das Abdeckelement 10 in einer Anordnung dargestellt, in welcher die beiden Aufhängeteile 30, 40 im wesentlichen in der gleichen Ebene liegen wie die Deckenplatte 20. In dieser Anordnung durchläuft das Abdeckelement 10 bei dessen Herstellung den Autoklaven. Des weiteren wird diese Anordnung für den Transport des Abdeckelementes 10 bevorzugt, da sich dann das Abdeckelement 10 platzsparend gleich wie eine Glasplatte transportieren lässt.

In Fig. 2 ist das Abdeckelement 10 in einer Anordnung dargestellt, die es nach der Montage als Teil einer untergehängten Lichtdecke einnimmt. Die Deckenplatte 20 ist im wesentlichen horizontal und die beiden Aufhängeteile 30, 40 ungefähr rechtwinklig zur Deckenplatte 20 angeordnet, so dass sie sich von der Deckenplatte 20 im wesentlichen vertikal nach oben erstrecken. Die Aufhängeteile 30, 40 sind mit Bohrungen 35, 45 versehen, welche im wesentlichen senkrecht durch die beiden Glasscheiben 32, 34, 42, 44 und die Verbundglasfolie 14, 16 der Aufhängeteile 30, 40 hindurch führen. Die Aufhängeteile 30, 40 sind mittels der Bohrungen 35, 45 in Aufhängehaken 52, 54 einhängbar, die fest an einer tragenden Decke angebracht sind, welche mit einer dasAbdeckelement 10 umfassenden Lichtdecke versehen ist. Zum Aufhängen des Abdeckelementes 10 werden die beiden plattenförmigen Aufhängeteile 30, 40 bezüglich der Deckenplatte 20 maximal nach oben und innen geschwenkt. Dann wird das Abdeckelement 10 nach oben geschoben, wobei die Aufhängeteile 30, 40 an den Haken 52, 54 vorbeigeführt werden, bis die Haken 52, 54 in die entsprechenden Bohrungen 35, 45 eingreifen. Anschliessend werden die Aufhängeteile 30, 40 bezüglich der Deckenplatte 20 in eine ungefähr rechtwinklige Position zurückgeschwenkt, so dass sie sicher an den Haken 52, 54 hängen. Bei dem in den Figuren dargestellten Ausführungsbeispiel wird die Deckenplatte 20 einzig durch die Verbundglasfolie 12, 14, 16 an den beiden Aufhängeteilen 30, 40 gehalten. Die Verbundglasfolie 12, 14, 16 trägt somit das gesamte Gewicht der Deckenplatte 20.

Weil - wie weiter oben erläutert - die Längsseiten der unteren Glasscheibe 22 der Deckenplatte 20 auf beiden Seiten um eine Distanz über die Längsseiten der oberen Glasscheibe 24 derselben vorstehen, die grösser ist als die Dicke der Glasscheiben 32, 34, 42, 44 der Aufhängeteile 30, 40, können bei einer mit einer Vielzahl vonAbdeckelementen 10 versehenen Lichtdecke benachbarte Abdeckplatten 20 (bzw. deren untere Glasscheiben 22) ohne Zwischenraum aneinanderstossend angeordnet werden, wie in Figur 2 zu erkennen ist.

Damit bei vollständig nach aussen geschwenkten Aufhängeteilen 30, 40 (d.h. in einer koplanaren Anordnung der Aufhängeteile 30, 40 und der Deckenplatte 20, wie sie in Fig. 1 dargestellt ist) keine grossen Zwischenräume zwischen der unteren Glasscheibe 22 der Deckenplatte 20 und der über die Verbundglasfolie 12, 14, 16 mit dieser verbundenen unteren Glasscheiben 32, 42 der Aufhängeteile 30, 40 entstehen, sind die unteren Glasscheiben 32, 42 der Aufhängeteile 30, 40 gegenüber den oberen Glasscheiben 34, 44 der Aufhängeteile 30, 40 im wesentlichen um die gleiche Distanz zurückversetzt, wie die oben erwähnte Distanz zwischen der unteren 22 und der oberen Glasplatte 24 der Deckenplatte 20 an deren längsseitigen Rändern.

Zur Herstellung eines Abdeckelementes 10, wie es in den Figuren dargestellt ist, werden zunächst die sechs Glasscheiben 22, 24, 32, 34, 42, 44 der beiden Aufhängeteile 30, 40 und der Deckenplatte 20 sowie die Verbundglasfolie 12, 14, 16 in einer Anordnung angeordnet, wie sie in Fig. 1 dargestellt ist. Anschliessend durchläuft diese Anordnung in einem Autoklav einen zum Zusammenlaminieren von Verbundgläsern gebräuchlichen Laminierprozess. Dabei werden die untere 22 und die obere Glasscheibe 24 der Deckenplatte 20, die untere 32 und die obere Glasscheibe 34 des einen Aufhängeteils 30 sowie die untere 42 und die obere Glasscheibe 44 des anderen Aufhängeteils 40 zusammenlaminiert. Zudem werden in denjenigen Bereichen, wo die oberen Glasscheiben 34, 44 der Aufhängeteile 30, 40 über der unteren Glasscheibe 22 der Deckenplatte 20 liegen, mittels derVerbundglasfolie 12, 14, 16 bereichsweise die oberen Glasscheiben 34, 44 der Aufhängeteile 30, 40 mit der unteren Glasscheibe 22 der Deckenplatte 20 verbunden. Um diese unerwünschten Verbindungen zu lösen, werden unmittelbar nach dem Austritt des Abdeckelementes 10 aus dem Autoklav (d.h. vor einem vollständigen Abkühlen des Abdeckelementes 10) die Deckenplatte 20 und die beiden Aufhängeteile 30, 40 bezüglich einander verschwenkt, um die Verbundglasfolie 12, 14, 16 in den entsprechenden Bereichen von der unteren Glasscheibe 22 der Deckenplatte 20 zu lösen und dadurch die Beweglichkeit der beiden Scharniergelenke 17, 18 zu gewährleisten.

Zusammenfassend ist festzustellen, dass durch die Erfindung ein u.a. auch für eine untergehängte Decke verwendbares Abdeckelement geschaffen wird, welches es ermöglicht, eine untergehängte Lichtdecke mit bloss geringfügigen Helligkeitsunterschieden an der Unterseite der Lichtdecke herzustellen. Insbesondere sind vom Rauminnern des mit der untergehängten Lichtdecke versehenen Raumes aus keine Beschläge zum Aufhängen von Deckenplatten oder Schatten solcher Beschläge sichtbar.

## Patentansprüche

1. Abdeckelement (10) zum Abdecken eines Gebäudeteils, mit einer Abdeckplatte (20), welche zwei durch eine Verbundglasfolie (12, 14, 16) zu einem Verbundglas verbundene Glasscheiben (22, 24) umfasst, dadurch gekennzeichnet, dass die Verbundglasfolie (12, 14, 16) eine über einen Rand einer der Glasscheiben (22, 24) vorstehende Partie (14) zum Verbinden derAbdeckplatte (20) mit einer Haltevorrichtung (52) aufweist.

2. Abdeckelement (10) nach Anspruch 1, gekennzeichnet durch ein mittels der vorstehenden Folienpartie (14) mit der Abdeckplatte (20) verbundenes Halteteil (30), das zwei weitere Glasscheiben (32, 34) umfasst, welche durch diese Folienpartie (14) zu einem weiteren Verbundglas verbunden sind.

3. Abdeckelement (10) nach Anspruch 2, dadurch gekennzeichnet, dass die vorstehende Partie (14) der Verbundglasfolie entlang eines geradlinigen Randes einer der Glasscheiben (22, 24) der Abdeckplatte (20) vorsteht und entlang dieses Randes ein Schwenkgelenk (17) nach Art eines Scharniers (17) bildet, um das Halteteil (30) um die Schamierachse (17) schwenkbar mit derAbdeckplatte (20) zu verbinden.

4. Abdeckelement (10) nach Anspruch 3, dadurch gekennzeichnet, dass die an das Scharnier (17) angrenzenden Ränder der auf einer ersten Seite der Verbundglasfolie (12, 14, 16) angeordneten Glasplatten (24, 34) derAbdeckplatte (20) und des Halteteils (30) je mit einer Gehrung versehen sind, deren Winkel derart bemessen sind, dass die Abdeckplatte (20) und das Halteteil (30) bezüglich einander von einer koplanaren Anordnung aus um mehr als neunzig Grad um die Scharnierachse (17) schwenkbar sind.

5. Abdeckelement (10) nach Anspruch 3 oder 4, dadurch gekennzeichnet, dass die auf der Sichtseite der Abdeckplatte (20) angeordnete Glasscheibe (22) über das Scharnier (17) hinaus vorsteht, damit bei einer mit einer Vielzahl vonAbdeckelementen (10) versehenen Fläche benachbarte Abdeckplatten (20) zwischenraumfrei aneinanderstossend angeordnet werden können.

6. Abdeckelement (10) nach einem der Ansprüche 3 bis 5, gekennzeichnet durch ein weiteres Halteteil (40), das mittels einer weiteren entlang eines geradlinigen Randes einer Glasplatte (22, 24) derAbdeckplatte (20) vorstehenden Folienpartie (16) mit der Abdeckplatte (20) verbunden ist und zwei weitere Glasscheiben (42, 44) umfasst, welche durch diese weitere Folienpartie (16) zu einem weiteren Verbundglas verbunden sind, wobei die insgesamt sechs Glasplatten (22, 24, 32, 34, 42, 44) der Abdeckplatte (20) und der beiden Halteteile (30, 40) durch eine einzige zusammenhängende Verbundglasfolie (12, 14, 16) miteinander verbunden sind.

7. Abdeckelement (10) nach Anspruch 6, dadurch gekennzeichnet, dass die beiden Halteteile (30, 40) je um eine Scharnierachse (17, 18) schwenkbar nach Art von Schwenkflügeln an der Abdeckplatte (20) angelenkt sind, wobei die beiden Scharnierachsen (17, 18) zueinander parallel sind.

8. Abdeckelement (10) nach einem der Ansprüche 1 bis 7, dadurch gekennzeichnet, dass die Abdeckplatte (20) eine Deckenplatte (20) für eine untergehängte Decke ist.

9. Verfahren zur Herstellung eines Abdeckelementes (10) nach einem der Ansprüche 2 bis 8, dadurch gekennzeichnet, dass in einem Autoklav die Glasplatten (22, 24) der Abdeckplatte (20) und die Glasplatten (32, 34) des Halteteils (30) in einem gemeinsamen Laminierprozess zu Verbundgläsern zusammenlaminiert werden.

10. Verfahren nach Anspruch 9, dadurch gekennzeichnet, dass nach dem Durchgang des Abdeckelementes (10) durch den Autoklaven hindurch und vor dem vollständigen Abkühlen des Abdeckelementes (10) die Abdeckplatte (20) und das Halteteil (30) bezüglich einander verschwenkt werden, um ein teilweises Lösen derverbundglasfolie (12, 14, 16) von den zusammenlaminierten Glasplatten (22, 24, 32, 34) zu bewirken und dadurch ein schwenkbares Schamiergelenk (17) zwischen der Abdeckplatte (20) und dem Halteteil (30) zu schaffen.
